# EUROPEAN PATENT APPLICATION

(11) **EP 0 596 733 A1**
(43) Date of publication of application: **11.05.1994**
(21) Application number: 93308819.7
(22) Date of filing: 04.11.1993
(51) Int. Cl.: G02F 1/1335, G02B 1/10

(54) **Liquid crystal display device**

(30) Priority: 05.11.1992 JP 296040/92
(71) Applicant: SHARP KABUSHIKI KAISHA, Osaka 545 (JP)
(72) Inventor: Uemura, Shigeru, Matsubara-shi, Osaka (JP); Aburazaki, Kazuyuki, Tenri-shi, Nara (JP)
(74) Representative: White, Martin David

(57) **Abstract**

To prevent reflection from the display surface of a liquid crystal display device and thereby enhance the visual recognition of the display surface, reflection preventive layers (23, 26, 29) are disposed on a surface of a shielding layer (22), a surface of a polarizer (25), and both sides of an acrylic plate (28) of a liquid crystal display device (38), respectively, and the overall reflectance of the liquid crystal display device (38) is decreased, so that the visual recognition of the display surface may be improved.

## Description

The present invention relates to a liquid crystal display device comprising a shielding layer for preventing light leakage from other areas than display region of liquid crystal display surface, and a reflection preventive layer for suppressing reflection of light on the liquid crystal display surface.

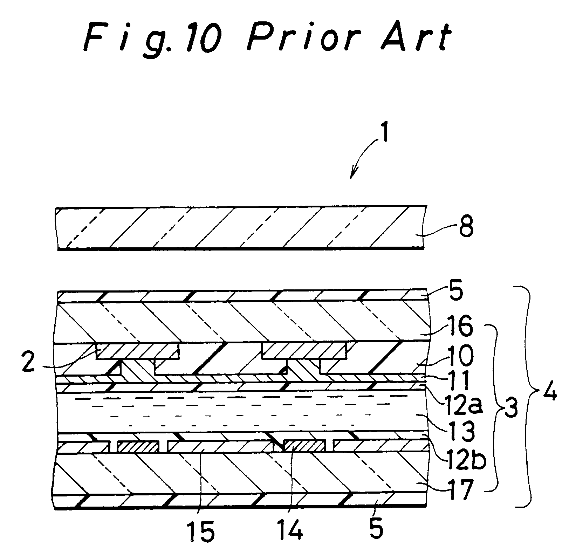

Fig. 10 is a sectional view showing the constitution of a conventional liquid crystal display device 1. The liquid crystal display device 1 comprises a liquid crystal display cell 3 by placing a liquid crystal layer 13 between a pair of light permeable substrates 16, 17, and a pair of polarizers 5 is disposed on both sides of the liquid crystal display cell 3 to comprise a liquid crystal display panel 4, and an acrylic plate 8 is disposed on the surface side thereof at an interval. On the surface of the liquid crystal layer 13 side of the display side substrate 16, a shielding layer (black mask) 2, a color filter 10, a transparent conductive film 11, and an orientation film 12a are formed in this order. On the other hand, on the surface of the liquid crystal layer 13 side of the other substrate 17, switching elements such as thin film transistor (TFT), wirings 14 such as scanning signal wire, pixel electrodes 15, and an orientation film 12b are formed in this order. The liquid crystal layer 13 is provided with a predetermined torsion angle by the pair of confronting orientation films 12a, 12b treated by orientation such as rubbing. Furthermore, the liquid crystal layer 13 is driven according to the data signals given through the wirings and switching elements 14 by the pixel electrodes 15 and transparent conductive film 11 confronting through the liquid crystal layer 13.

Color filters 10 consisting of red, green and blue color filters present colors depending on thc mixing ratio by receiving transmission light according to the data signals from the liquid crystal layer 13 in the pixel unit. The black mask 2 is provided in order to prevent light leakage from other parts than the pixel electrodes 15, and it is made of metal, especially chromium (Cr), in consideration of the light shielding performance and processability. On the other hand, the polarizer 5 is to pass only the polarized light oscillating in a specific direction, and consists of three layers of TAC (triacetyl cellulose), PVA (polyvinyl alcohol) and TAC. The polarizer 5 disposed on the substrate 17 surface applies linear polarization to light entering the liquid crystal layer 13, and the polarizer 5 disposed on the substrate 16 surface transmits only the polarized light oscillating in the direction of transmission axis of the transmitted light from the liquid crystal layer 13. The acrylic plate 8 is disposed in order to protect the liquid crystal display panel 4 from external pressure, flaw, or staining.

However, when the black mask 2 is formed of thin metal film of chromium or the like, the reflectance of light on the surface of the black mask 2 is great, and the visual recognition of the display of the liquid crystal display device 1 is lowered. Still more, the reflection on the surface of the polarizer 5 and on the surface of the acrylic plate 8 is added, and the visual recognition is further lowered.

For example, in the active matrix liquid crystal display device 1 using TFT as switching element, the reflectance on the surface of the black mask 2 made of chromium is about 50%, and the reflectance on the surface of the surface side polarizer 5 is about 4%.

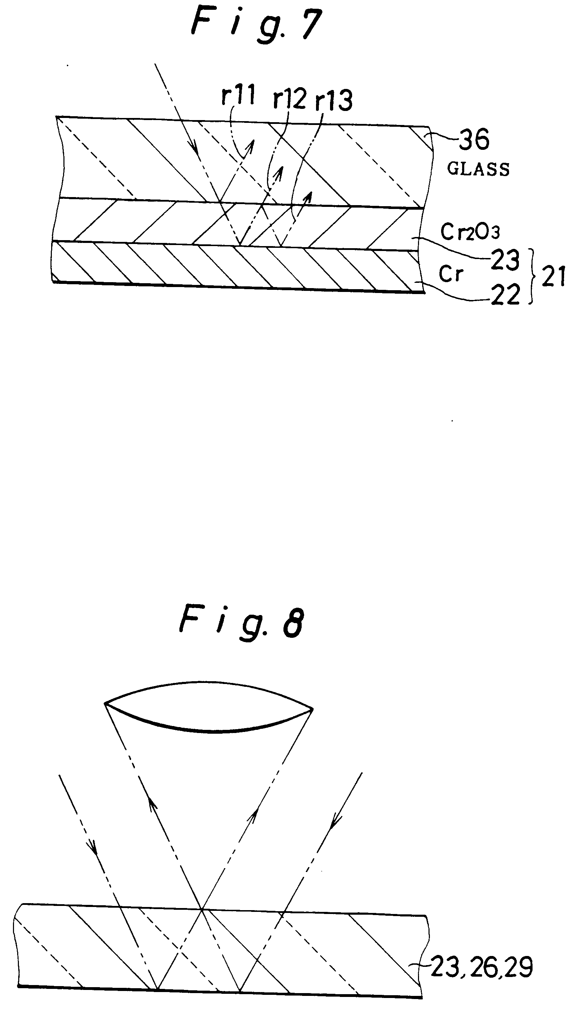

The reflectance on the surface of the acrylic plate 8 is measured to be about 4%. This measurement value is obtained by measuring the reflected light strength by focusing on each layer of the liquid crystal display device 3 as shown in Fig. 8.

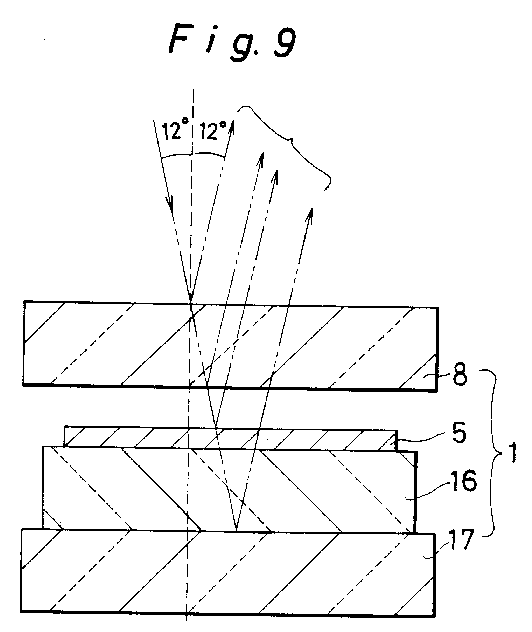

When the opening rate of the liquid crystal display cell 3 is designed at 40%, the rate of the black mask 2 occupying on the liquid crystal display surface is 60%, and the reflection from the surface of the black mask 2 is not negligible. The overall reflectance of the liquid crystal display cell 3 is about 16%, and the reflected light is projected on the display surface even in a room. This overall reflectance is the measurement of the light reflected from the surface of each layer coming out at an angle of 12° to the normal direction of the surface of the acrylic plate 8. The incident plane of the light source light is realized by emitting the light source light at an angle of 12 degrees to the normal direction of the surface of the acrylic plate 8 of the liquid crystal display cell 3 as shown in Fig. 9, that is, the light reflected from the both surfaces of the acrylic plate 8, the surface of the polarizer 5, and the surface of the black mask 2.

It is hence a primary object of the invention to present a liquid crystal display device of excellent visual recognition of the display surface by solving the conventional problems and reducing the reflection from the display surface.

To achieve the object, the invention presents a liquid crystal display device comprising:
a liquid crystal display cell 39 in which a liquid crystal display layer intervenes between a pair of light permeable substrates 36, 37 having transparent electrodes 31, 35 and orientation films 32a, 32b respectively on confronting surfaces thereof and a plurality of display regions are formed,
a pair of polarizers 25, 25a disposed on both sides of the liquid crystal display cell 39, wherein
a first reflection preventive layer 23 and a shielding layer 22 laminated thereon are formed in a remaining region other than the display regions, on a liquid crystal layer side surface of the light permeable substrate 36 disposed on a display surface side out of the pair of the light permeable substrates 36, 37, and
a second reflection preventive layer 26 is formed on the surface of the polarizer 25a disposed on the display surface side, out of the pair of polarizers 25, 25a.

Furthermore, to achieve the object, the invention presents a liquid crystal display device comprising:
a liquid crystal display cell in which a liquid crystal layer 33 intervenes between a pair of substrates and a pair of polarizers,
the liquid crystal display cell being arranged between the pair of polarizers, wherein a substrate 39a disposed on a display surface side out of the pair of substrates includes a light permeable substrate, a first reflection preventive layer formed in a remaining region other than the display regions on a liquid crystal layer side surface of the light permeable substrate, and a shielding layer formed on a surface of the first reflection preventive layer, and
a second reflection preventive layer is formed on an outside surface of the polarizer 25a placed on a display surface side out of the pair of polarizers.

In the invention, a protective plate made of light permeable material is disposed at an interval on the front surface of the polarizer on which the reflection preventive layer is formed, and reflection preventive layers are formed on both sides in the thicknesswise direction of the protective plate.

Furthermore, the invention is characterized in that the first reflection preventive layer is made of Cr₂O₃, and the shielding layer is made of Cr.

Furthermore, the invention is characterized in that the first reflection preventive layer is made of Al₂O₃, and the shielding layer is made of Ni.

Furthermore, the invention is characterized in that the first reflection preventive layer is made of TiO₂, and the shielding layer is made of Ti.

Furthermore, the invention is characterized in that the first reflection preventive layer is made of SiO, and the shielding layer is made of Al.

Furthermore, the invention is characterized in that the first reflection preventive layer is made of Nb₂O₅, and the shielding layer is made of Nb.

Furthermore, the invention is characterized in that the second reflection preventive layer is formed in plural layers laminating alternately ZrO₂ layer and SlO₂ layer.

Preferably, on the front surface of the polarizer of the display surface side, a protective plate made of light permeable material is disposed at an interval from the front surface of the polarizer of the display surface side, and reflection preventive layers are formed on both sides in the thicknesswise direction of the protective plate, so that the reflection from the both sides of the light permeable protective plate can be prevented. As a result, the visual recognition of the display surface of the liquid crystal display device can be further enhanced.

According to the invention, in the liquid crystal display cell, transparent electrodes and orientation films are formed on the confronting surfaces of the pair of light permeable substrates, and a the liquid crystal layer intervenes between the pair of substrates. Also in the liquid crystal display cell, a plurality of pixel regions are disposed in a matrix form, and the shielding layer is formed on the liquid crystal layer side surface of the display surface side substrate to prevent light leakage from the other area than the pixel regions. Between the light shielding layer and display surface side substrate, a reflection preventive layer is formed to decrease reflection of light on the shielding layer.

The liquid crystal display device is formed by disposing the liquid crystal display cell between the pair of polarizers, and forming the reflection preventive layer on the polarizer surface disposed at the display surface side of the liquid crystal display cell. As a result, reflection of light on the shielding layer and polarizing plate surface can be decreased, and the visual recognition of the liquid crystal display device can be enhanced.

Preferably, moreover, a protective plate made of light permeable material is disposed at an interval on the front surface of the polarizer of the display surface side, and reflection preventive layers are formed on both sides of the protective plate. As a result, the reflection from the front and rear sides of the protective plate is decreased, so that the visual recognition of the liquid crystal display device can be also enhanced.

Thus, according to the invention, by forming a reflection preventive layer and a shielding layer laminated thereon in the region other than display regions on the surface of the liquid crystal layer side of the light permeable substrate disposed on the display surface side of the liquid crystal display cell, leakage of light from other area than the pixel regions of the liquid crystal display cell can be prevented, while the reflection of light entering from the substrate side of the shielding layer is decreased. Moreover, by forming the reflection preventive layer on the surface of the polarizer disposed on the display surface side of the liquid crystal display cell, the reflection from the polarizer surface can be decreased, so that the visual recognition of the display surface of the liquid crystal display device can be enhanced.

Other and further objects, features, and advantages of the invention will be more explicit from the following detailed description taken with reference to the drawings wherein:

Fig. 1 is a sectional view showing the composition of a liquid crystal display device 38 in an embodiment of the invention.

Fig. 2 is a plan view of a black mask 21.

Fig. 3 is a plan view of a wiring 34 and a pixel electrode 35.

Fig. 4 is a drawing for explaining the reflection of a polarizer 25a forming a single reflection preventive layer 26.

Fig. 5 is a graph showing the relation between the wavelength and reflectance of incident light for multiple reflection preventive layers.

Fig. 6 (1) is a drawing for explaining the reflection preventive effect in the case of forming a reflection preventive layer 29 on one side of an acrylic plate 28; and Fig. 6 (2) is a drawing for explaining the reflection preventive effect in the case of forming reflection preventive layers 29 on both sides of the acrylic plate 28.

Fig. 7 is a drawing for explaining the mode of reflection on the surface of the black mask 21.

Fig. 8 is a drawing for showing a method of measuring the reflectance of each layer of the liquid crystal display devices 1, 38.

Fig. 9 is a drawing for showing a method of measuring the overall reflectance of the liquid crystal display devices 1, 38.

Fig. 10 is a sectional view showing the composition of the conventional liquid crystal display device 1.

Now referring to the drawing, preferred embodiments of the invention are described below.

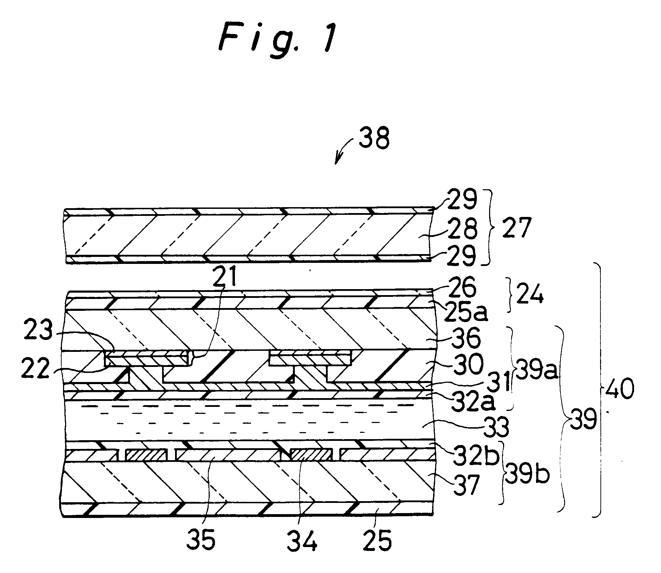

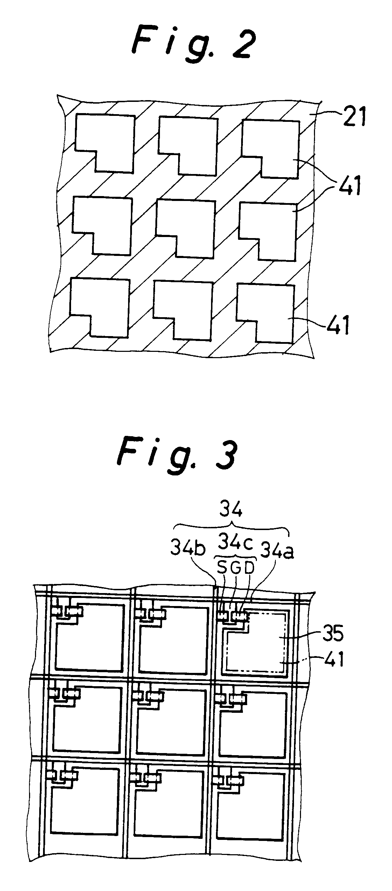

Fig. 1 is a sectional view showing the composition of a liquid crystal display device 38 in an embodiment of the invention; Fig. 2 is a plan view of a shielding layer 21; and Fig. 3 is a plan view of a wiring 34 and a pixel electrode 35. In the liquid crystal display device 38, a liquid crystal layer 33 interposed between a pair of substrates 39a, 39b to comprise a liquid crystal display cell 39, and a pair of polarizers 24, 25 are disposed on both sides of the liquid crystal display cell 39 to form a liquid crystal display panel 40. In the liquid crystal display device 38, moreover, a protective plate 27 is disposed at an interval from the polarizer 24, on the display surface side of the liquid crystal display panel 40. The display surface side polarizer 24 of the liquid crystal display panel 39 is a reflection preventive polarizer, and a reflection preventive layer 26 is formed on the opposite side surface of the liquid crystal display cell 39 of the polarizer 25a. The protective plate 27 is a reflection preventive acrylic plate, and reflection preventive layers 29 are formed on both sides in the thicknesswise direction of the acrylic plate 28.

On the liquid crystal layer 33 side surface of the light permeable substrate 36 being made of glass or the like and composing the display surface side substrate 39a of the liquid crystal display cell 39, a shielding layer (black mask) 21, a color filter 30, a transparent conductive film 31, and an orientation film 32a are formed in this order. The black mask 21 is a reflection preventive black mask, and a reflection preventive layer 23 and a shielding layer 22 are laminated in this order on the surface of the substrate 36. The black mask 21 is formed in a remaining region other than a plurality of display regions 41 arranged in a matrix form. The color filter 30 is formed to cover the display region 41. One color among red, green and blue is selected as a color of the color filter 30 for each display region.

On the liquid crystal layer 33 side surface of the light permeable substrate 37 being made of glass or the like and comprising the other substrate 39b, switching elements 34c such as thin film transistor (TFT), wirings 34 including scanning signal wires 34a and data signal wires 34b, pixel electrodes 35, and orientation film 32a are laminated and formed in this order. A gate electrode forming the switching element 34c is connected to the scanning signal wire 34a, a source electrode S is connected to the data signal wire 34b and a drain electrode D is connected to the pixel electrode 35. The pixel electrode 35 is formed in the region including the display region 41.

The liquid crystal layer 33 is provided with a predetermined torsion angle by the pair of confronting orientation films 32a, 32b treated for orientation by rubbing or the like, and is driven by the confronting pixel electrodes 35 and transparent conductive film 32 depending on the data signals given through the wirings 34a, 34b and switching elements 34c. Color filters 30 composed of red, green and blue color filters present colors depending on the mixing ratio by receiving transmission light depending on the data signals from the liquid crystal layer 33 in the pixel unit. The shielding layer 22 is provided in order to prevent leakage of light from the other parts than the pixel electrodes 35. The shielding layer 22 is made of metal, especially chromium (Cr), because of its excellent light shiclding properties, superior precision of pattern forming, and freedom from contamination of glass substrate by the enchant used in pattern forming.

The polarizers 24, 25 are to transmit only the polarized light oscillating in a specific direction, and the polarizer 25 disposed on the surface of the substrate 37 linearly polarizes light entering the liquid crystal layer 33, while the polarizer 24 disposed on the surface of the substrate 36 transmits only the polarized light oscillating in the transmission axis direction of the light transmitted from the liquid crystal layer 33, thereby giving bright and dark tints to the pixels. The protective layer 27 is disposed in order to protect the liquid crystal display panel 40 from external pressure, flaw or contamination.

The black mask 21 is formed by laminating, on the surface of the substrate 36, a reflection preventive layer 23 made of, for example, chromium oxide (Cr₂O₃), and shielding layer 22 made of, for example, chromium (Cr). In the forming method of the black mask 21, a thin film made of Cr₂O₃ with a thickness of 250 to 350 Å is formed on the substrate 36 by a sputtering method or the like, and then a Cr layer with a thickness of 800 to 1200 Å is laminated also by a sputtering method. Afterwards, the two layers are etched to form a pattern.

The reflection preventive polarizer 24 is composed of the polarizer 25a and the reflection preventive layer 26 consisting of five layers.
ZrO₂ and SiO₂ layers are alternated and laminated together in this order on the surface of the polarizer 25a by a spluttering method. The polarizers 25, 25a are made of three layers of TAC (triacetyl cellulose), PVA (polyvinyl alcohol),and TAC, and the refractive index of the TAC for composing the polarizers 25, 25a is 1.5. The refractive index of the glass substrate 36, 37 is 1.5, and because of no difference in the refractive index from the polarizers 25, 25a, reflection does not occur on the boundary surface.

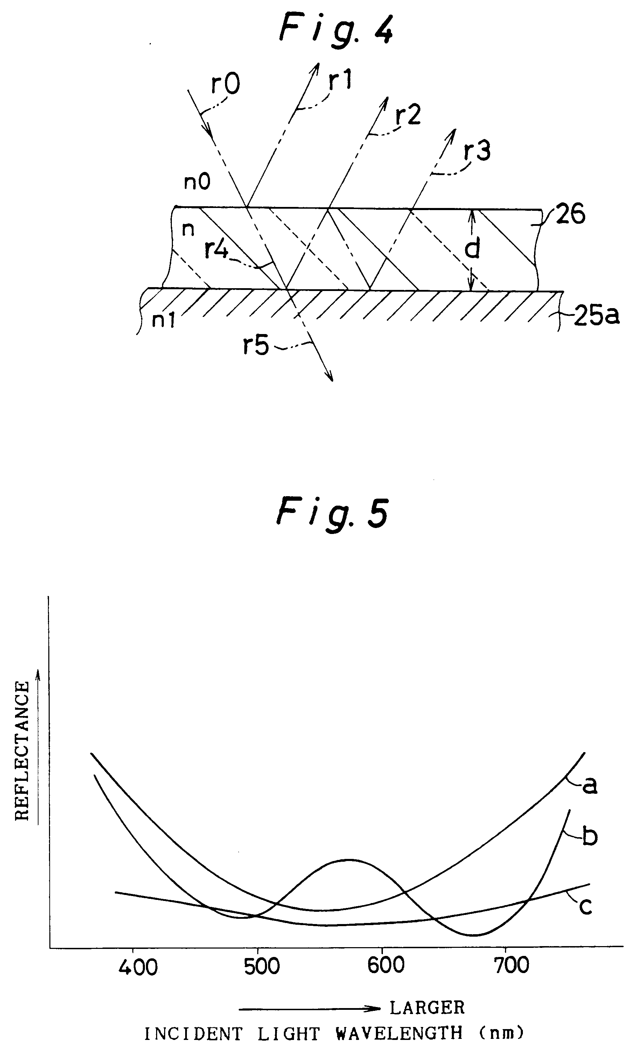

Fig. 4 is a drawing for explaining the mode of prevention of reflection from the polarizer 25a surface of the single reflection preventive layer 26. As shown in Fig. 4, the reflection preventive layer 26 is formed on the polarizer 25a. The light r_{O} entering the reflection preventive layer 26 is divided into reflected light r₁ and refracted light r₄ on the surface of the reflection preventive layer 26. The refracted light r₄ passing through the reflection preventive layer 26 is further divided into reflected light r₂, r₃ and refracted light r₅ on the surface of the polarizer 25a. In this way, when the light r₁ reflected on the surface of the reflection preventive layer 26, and light r₂, r₃ reflected on the surface of the polarizer 25a are emitted from the surface of the incident side reflection preventive layer 26, reflection of light is prevented by canceling each other by interference. Supposing the refractive index of the reflection preventive layer 26 to be n, the film thickness to be d, the wavelength of incident light to be λ , and the refractive index of the polarizer 25a to be n1, when the phase condition of nd = λ/4 and amplitude condition of n = n1^{1/2} are satisfied, reflection of incident light r_{O} of wavelength λ can be prevented on the surface of the reflection preventive layer 26. When n < n1, the reflection decreases, and when n > n1, the reflection decreases.

Fig. 5 is a graph showing an example of relation between the wavelength of incident light and reflectance on the multiple reflection preventive layers. As shown by line a of Fig. 3, in a single reflection preventive layer, the reflectance declines as the wavelength λL of the incident light approaches λ = 550 nm, and the reflectance is the minimum at λL of about 550 nm, and as the wavelength λ of incident light further increases, the reflectance begins to increase again. When the reflection preventive layer is formed in two layers, the reflection can be minimized at two different wavelengths. As shown by line b of Fig. 5, the reflection once becomes minimum at the wavelength λ of incident light of about 460 nm, and become minimum again at the wavelength λ of incident light of about 680 nm. When using such reflection preventive layers, since the reflection preventive layers prevent the reflection of incident light of specific wavelength only, the reflected light appears to be colored when white light is entered. However, when reflection preventive layers are installed in the liquid crystal display device or the like, it is preferred to prevent reflection in the entire visible range (λ = 400 to 700 nm) of incident light. As shown by line c of Fig. 5, when using the reflection preventive layer consisting of five layers formed by laminating a ZrO₂ layer and SiO₂ layer alternately, the reflection is maintained low in the entire visible range of incident light.

The acrylic plate 28 is high in light transmissivity, free from optical anisotropy, and superior in strength, and therefore it is used for protecting the liquid crystal display panel from external pressure, flaw or staining. The reflection preventive acrylic plate 27 is a protective plate wherein reflection preventive layers 29 is formed on both sides of the acrylic plate 28, and it is commercially available. For the acrylic plate 28, two manufactures' custom-made plates are used, one of which is a double-sided AR coated acrylic plate of Sumitomo Kagaku Kogyo Kabushiki Kaisha and the other of which is AR coated CAAREX RH20 EX30 MC-001 without nonglare treatment of Nitto Jushi Kogyo Kabushiki Kaisha.

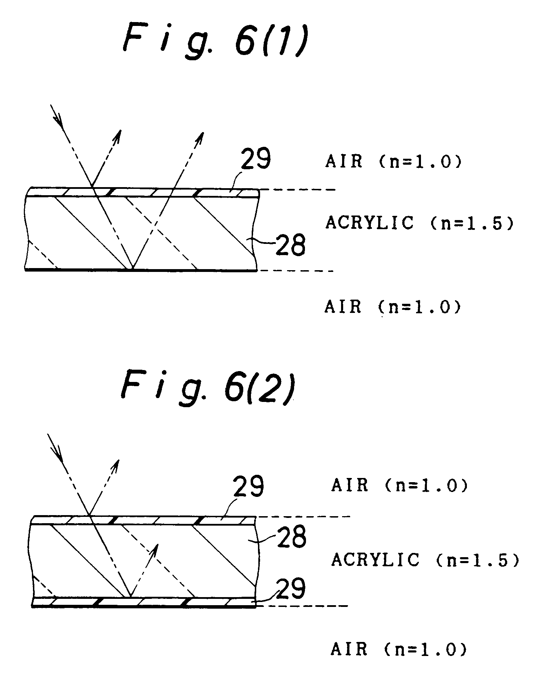

Fig. 6 presents drawings for explaining the difference between the acrylic plates 28 namely, one having the reflection preventive layer 29 on one side thereof and the other having the reflection preventive layer 29 on both sides thereof. The acrylic plate 28 is disposed at a interval from the liquid crystal display panel 40, and its refractive index is about 1.5. Therefore, the light is reflected on both sides of the acrylic plate 28, and the reflection from the surface of the other side cannot be ignored when the reflection preventive layer 29 is disposed only at one side of the acrylic plate 28 as shown in Fig. 6(1) (1). Hence, as shown in Fig. 6 (2), by disposing the reflection preventive layers 29 on both sides of the acrylic plate 28, the reflection on the acrylic plate 28 can be maintained low.

Fig. 7 is a drawing showing the mode of reflection on the surface of the black mask 21. The shielding layer 22 is made of chromium or other metal. The light entering the metal layer is almost completely absorbed by the intense absorption in the metal. When the refracted light is thus absorbed, the refractive index is expressed by complex number, and in the case of chromium, n_{Cr} is equal to 4-4i On the metal surface, by natural oscillation of electrons or ions in the metal, the light of specific wavelength out of the Incident light is selectively reflected or absorbed. In the liquid crystal display device 38, the reflection preventive layer 23 with refractive index of about 3 made of Cr₂O₃ is interposed between the shielding layer 22 and glass substrate 36. Hence, the light r₁₁ reflected on the surface of the reflection preventive layer 23 and entering the glass substrate 36, the light r₁₂ reflected on the surface of the shielding layer 22 and entering the glass substrate 36, and the light r₁₃ reflected repeatedly on the surface of the shielding layer 22 and the surface of the glass substrate 36 and entering the glass substrate 36 interfere with each other and are cancelled. Thus, the intensity of the reflected light emitted from the glass substrate 36 is decreased, and the reflectance on the surface of the shielding layer 22 is decreased.

In this way, different reflection preventive layers are disposed on each layer of the shielding layer 22, polarizer 25, and acrylic plate 28. In both Conventional liquid crystal display device 1 and liquid crystal display device 38 of the embodiment, the opening rate of the display surface is predetermined at 40%. Therefore, the area of the black mask 21 occupies 60% of the display surface. In the liquid crystal display cell 3 without polarizers, when a reflection preventive layer made of Cr₂O₃ was formed only in the black mask 2 made of chromium, the reflectance of the black mask 2 could be decreased from the conventional reflectance of 50% to 1%. When the polarizer 5 was disposed on this liquid crystal display cell 3, the overall reflectance of the surface of the polarizer 5 could be reduced from the conventional reflectance of 12% to 4%.

However, due to the overall reflectance of 4% from the polarizer 5, the light from a fluorescent lamp or the like is reflected, which may disturb the display. Accordingly, moreover, a reflection preventive layer is formed on the surface of the polarizer 5 and disposed on the liquid crystal display cell 3. As a result, the reflectance from the polarizer 5 could be decreased from 4% to 0.5%.

In the liquid crystal display panel 4 having a reflection preventive layer formed only on the black mask 2, the total reflectance is 4%, whereas formation of reflection preventive layers 23, 26 on the black mask 22 and polarizer 25a, respectively 1 contributed to reduce the total reflectance from the liquid crystal display panel 40 to 1%. Furthermore, while the reflectivity from the acrylic plate 28 is 4% when the acrylic plate 28 is disposed on the liquid crystal display panel 40, the total reflectivity of the liquid crystal display cell 38 could be decreased to 1% when the reflection preventive layers 29 were formed on both sides of the acrylic plate 28.

To determine the reflectance of each layer, focusing on the measuring layers 23, 26, 29 by using a microscopic spectroscope as shown in Fig. 8, the strength of light is measured only on the reflected light of the layer from the normal direction to the measuring surface. By contrast, the overall reflectance is measured by feeding light source light from the direction of 12 degrees in the normal direction of the display surface of the liquid crystal display cells 3, 39 as shown in Fig. 9, combining the reflected lights from all layers composing the liquid crystal display panel 4, 40 on the display surface, and measuring the light strength thereof.

In the liquid crystal display device 38 of the embodiment, as the black mask 21 for prevention of reflection, chromium is used in the shielding layer 22 and Cr₂O₃ in the reflection preventive layer 23, but as the combination of shielding layer 22 and reflection preventive layer 23, Ni and Al₂O₃, Ti and TiO₂, Al and SiO₂, and Nb and Nb₂O₅ may be used.

In the liquid crystal display device 38 of the embodiment, the reflection preventive layer 26 formed on the polarizer 25a may consist of three layer, four layers or six layers laminated with alternations of ZrO₂ layer and SiO₂ layers. The more the number of the layers is, the more the characteristic of spectral reflection is improved but the more cost must be born for manufacturing. Therefore, in order to improve the characteristic of spectral reflection allowing for a reasonable manufacturing cost, the number of the layers laminated with ZrO₂ layers and SiO₂ layers is preferably between three and five years.

As described above, the reflection preventive layer 26 of the embodiment is formed by lamination of alternations of ZrO₂ layer and SiO₂ in this order on the polizer 25a. In addition, the reflection preventive layer may be formed by lamination of alternations of TiO₂ layers and SiO₂ layers in this order.

The invention may be embodied in other specific forms without departing form the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A liquid crystal display device (38) comprising:
a liquid crystal display cell (39) in which a liquid crystal layer (33) is interposed between a pair of light permeable substrates (36, 37) having transparent electrodes (31, 35) and orientation films (32a, 32b) respectively on opposed surfaces thereof and a plurality of display regions (41) are formed,
a pair of polarizers (25, 25a) disposed on both sides of the liquid crystal display cell (39), wherein
a first reflection preventive layer (23) and a shielding layer (22) laminated thereon are formed in a remaining region other than the display regions (41), on a liquid crystal layer side surface of the light permeable substrate (36) disposed on a display surface side of said liquid crystal display cell (39), and
a second reflection preventive layer (26) is formed on the surface of the polarizer (25a) disposed on the display surface side.

2. A liquid crystal display device (38) comprising:
a liquid crystal display cell (39) in which a liquid crystal layer (33) is interposed pair of substrates (39a, 39b) and a pair of polarizers (25, 25a),
the liquid crystal display cell (39) being arranged between the pair of polarizers (25, 25a), wherein a substrate (39a) disposed on a display surface side of the liquid crystal cell (39) includes a light permeable substrate (36), a first reflection preventive layer (23) formed in a remaining region other than the display regions (41) on a liquid crystal layer side surface of the light permeable substrate (36), and a shielding layer (22) formed on a surface of the first reflection preventive layer (23), and
a second reflection preventive layer (26) is formed on an outside surface of the polarizer (25a) placed on the display surface side.

3. A liquid crystal display device (38) as claimed in claim 1 or 2, wherein a protective plate (28) made of light permeable material is disposed at a distance from the front surface of the polarizer (25a) on which the second reflection preventive layer (26) is formed, and third reflection preventive layers (29) are formed on both sides of the protective plate (28).

4. A liquid crystal display device (38) as claimed in claim 1 or 2, wherein the first reflection preventive layer (23) is made of Cr₂O₃, and the shielding layer (22) is made of Cr.

5. A liquid crystal display device (38) as claimed in claim 1 or 2, wherein the first reflection preventive layer (23) is made of Al₂O₃, and the shielding layer (22) is made of Ni.

6. A liquid crystal display device (38) as Claimed in claim 1 or 2, wherein the first reflection preventive layer (23) is made of TiO₂, and the shielding layer (22) is made of Ti.

7. A liquid crystal display device (38) as Claimed in claim 1 or 2, wherein the first reflection preventive layer (23) is made of SiO, and the shielding layer (22) is made of Al.

8. A liquid crystal display device (38) as claimed in claim 1 or 2, wherein the first reflection preventive layer (23) is made of Nb₂O₅, and the shielding layer (22) is made of Nb.

9. A liquid crystal display device (38) as claimed in claim 1 or 2, wherein the second reflection preventive layer (26) is formed in plural layers laminating alternately ZrO₂ layer and SiO₂ layer.
